# EUROPEAN PATENT APPLICATION

(11) **EP 2 407 731 A2**
(43) Date of publication of application: **18.01.2012**
(21) Application number: 11173685.6
(22) Date of filing: 12.07.2011
(51) Int. Cl.: F24J 2/26, F24J 2/04

(54) **High efficiency solar collector device**

(30) Priority: 12.07.2010 IT BO20100071 U
(71) Applicant: Polo S.r.l., 23900 Lecco (IT)
(72) Inventor: Pozzi, Marco, 23900 LECCO (IT); Locatelli, Silvia, 23900 LECCO (IT)
(74) Representative: Ponzellini, Gianmarco

(57) **Abstract**

A high-efficiency solar collecting device, having a peripheral support structure (15) at least for a bottom (11) and for a transparent upper slab (30) for exposure to the sun, which superposes an absorbing means (20) comprising conduits (21, 22) for a fluid to be heated, ends of which are in flow communication with connecting means (12) for inlet and outlet of the fluid, comprises:
a plate (23) of the absorbing means (20) to which the conduits (21, 22) are fixed, and which projects therefrom with a projecting edge (26);
a profiled member (14) internal of the support structure (15) and interposed between the slab (30) and the absorbing means (20) such as to constrain the projecting edge (26) of the plate (23).

## Description

### TECHNICAL FIELD

The present invention relates to the energy sector and the exploitation of renewable resources, and concerns a high-efficiency solar collector device, of a type also known as a solar thermal panel.

### BACKGROUND

Collectors are known for heating water, comprising bundles of main conduits and secondary conduits connected to respective plates, a surface of which is destined to be exposed to the sun. The ends of the second conduits of the bundle are connected to two main conduits, one for inlet and one for outlet of the water.

Some solar collectors of known type comprise the fluid flowing in a space delimited by two parallel slabs, edges of which are reciprocally hydraulically sealedly joined.

One of the disadvantages of known collectors relates to the presence of different thermal dilations between the various parts of the devices, which give rise to deformations, even of considerable entity. The dilations can cause, over time, breakage of the attachments or conduits for the fluid. Further, as the deformations vary the thickness of the insulation material, they cause heat dispersions which reduce the efficiency of the collectors.

### SUMMARY

An aim of the present invention is to provide a high-efficiency solar collector device which is economical, easy to realise and to maintain.

A further aim is to provide a device that is virtually free of deformations and stresses due to the heat dilation and which is therefore well insulated in all conditions, and which is very hardy.

A further aim is to provide a device that prevents dust, impurities and dirt from depositing on the absorbing means and consequently a device which does not manifest degradation of efficiency thereof during the course of use thereof.

According to a first aspect, a high-efficiency solar collector device is provided having a peripheral support structure 15 at least for a bottom 11 and for a transparent upper slab 30 for exposing to the sun which overlies an absorbing means 20 comprising main conduits 21 and secondary conduits 22 for a fluid to be heated and in which the ends of the main conduits 21 are in flow communication with connecting means 12 for the inlet and outlet of the fluid, the device 10 being characterised in that it comprises: a plate 23 of the absorbing means 20 to which the conduits 21, 22 are inferiorly fixed and which projects from the conduits 21, 22 with a projecting edge 26; a profiled member 14 internal of the support structure 15 and interposed between the slab 30 and the absorbing means 20 such as to constrain the projecting edge 26 of the plate 23.

In a second aspect according to the first aspect, a device is provided in which the profiled member 14 exhibits a projection 17 partially superposed on the projecting edge 26 of the plate 23 in order to enable a blocking which is mainly perpendicular to the plate 23 and contemporaneously a free longitudinal dilation of the plate 23.

In a third aspect of the invention, according to the second aspect, a device is provided in which the pressure contact between the projection 17 and the plate 23 realises a sealed dividing surface of the device 10 between an upper zone 50 for solar exposition and a lower zone 40 that is thermally insulated.

In a fourth aspect according to the third aspect, a device is provided in which the plate 23 and the projection 17 conform a seal.

In a fifth aspect according to the fourth aspect, a device is provided in which the upper zone 50 is comprised between the transparent upper plate 30 and the seal, while the lower zone 40 is comprised between the seal and the bottom 11.

In a sixth aspect according to the fifth aspect, a device is provided in which the lower zone 40 is filled with heat-insulating material 41.

In a seventh aspect, according to any one of the preceding aspects, a device is provided in which the connecting means 12 are positioned in proximity of the corners of the absorbing means 20 at the ends of the main conduits 21.

In an eighth aspect according to the seventh aspect, a device is provided in which the main conduits 21, in proximity of the ends, exhibit a partially curved tract 24 which terminates with an angled hydraulic connection 25.

In a ninth aspect according to any one of the preceding aspects, a device is provided in which the absorbing means 20 is made of metal and preferably made of copper.

In a tenth aspect according to any one of the preceding aspects, a device is provided in which the transparent slab 30 is made of a low-emission glass or in another material having similar characteristics of transparency to solar radiation.

In an eleventh aspect according to any one of the preceding aspects, a device is provided in which the peripheral support structure 15 is constituted by a plurality of profiled members 13 which are removably constrained to one another and preferably have an L-shaped section.

In a twelfth aspect according to the eleventh aspect, a device is provided in which the bottom 11 is made of a plastic material and is preferably tray-conformed, constrained to the profiled elements 13 of the peripheral support structure 15.

In a thirteenth aspect according to any one of the preceding aspects, a device is provided in which the internal profiled element 14 mutually distances the plate 23 from the transparent slab 30.

### BRIEF DESCRIPTION OF THE DRAWINGS

The characteristics of the invention are set out herein below, with particular reference to the accompanying figures of the drawings, in which:
- figure 1 illustrates a view from above of the solar collector device which is the object of the present invention;

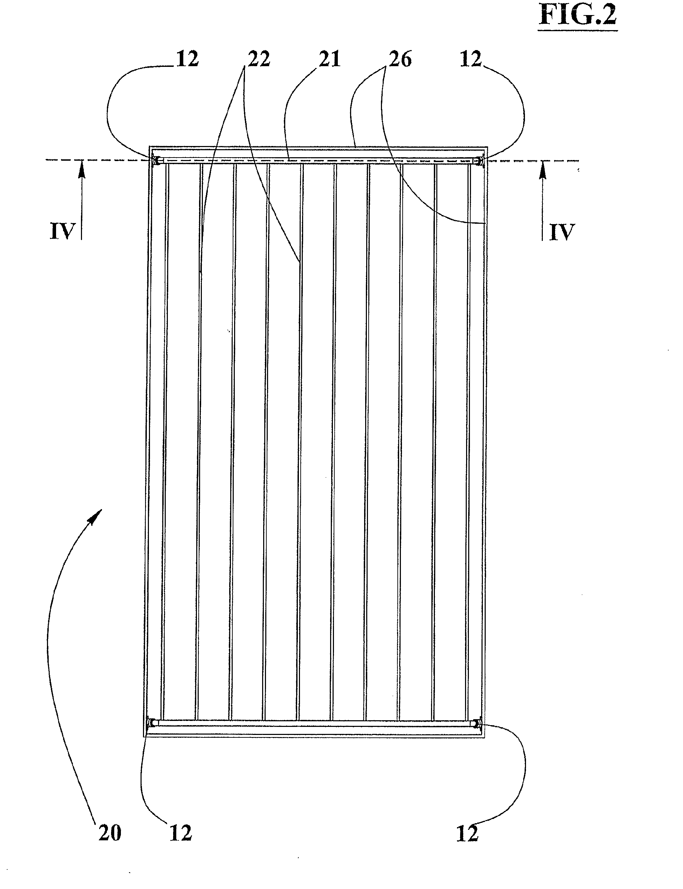

- figure 2 is a view from above of the absorbing means of the device of figure 1;

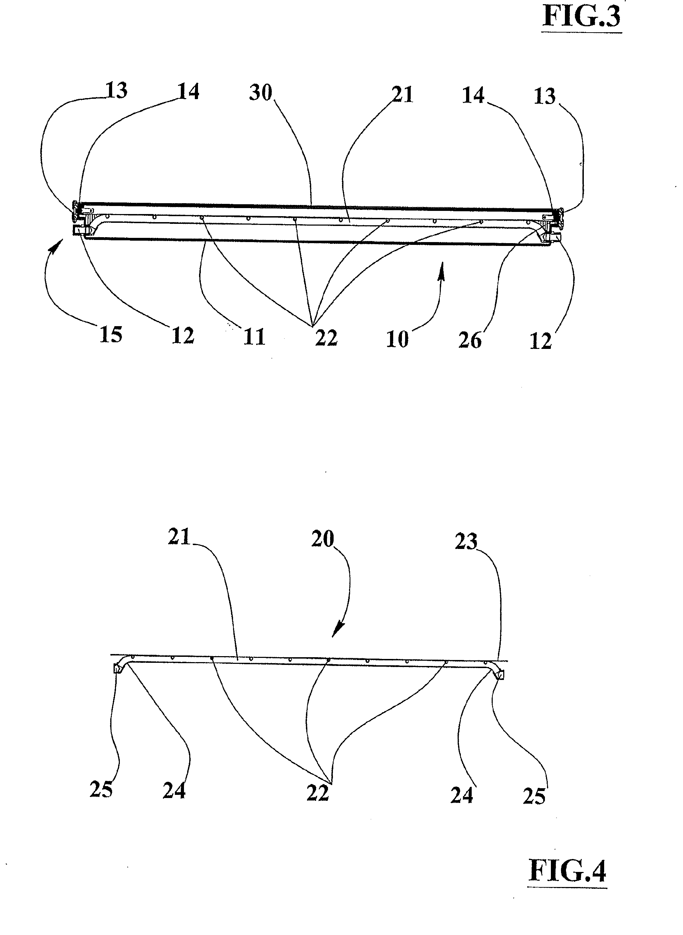

- figure 3 is a section view according to plane III-III of the solar collector device of figure 1;
- figure 4 is a section view according to plane IV-IV of the absorbing means of figure 2;

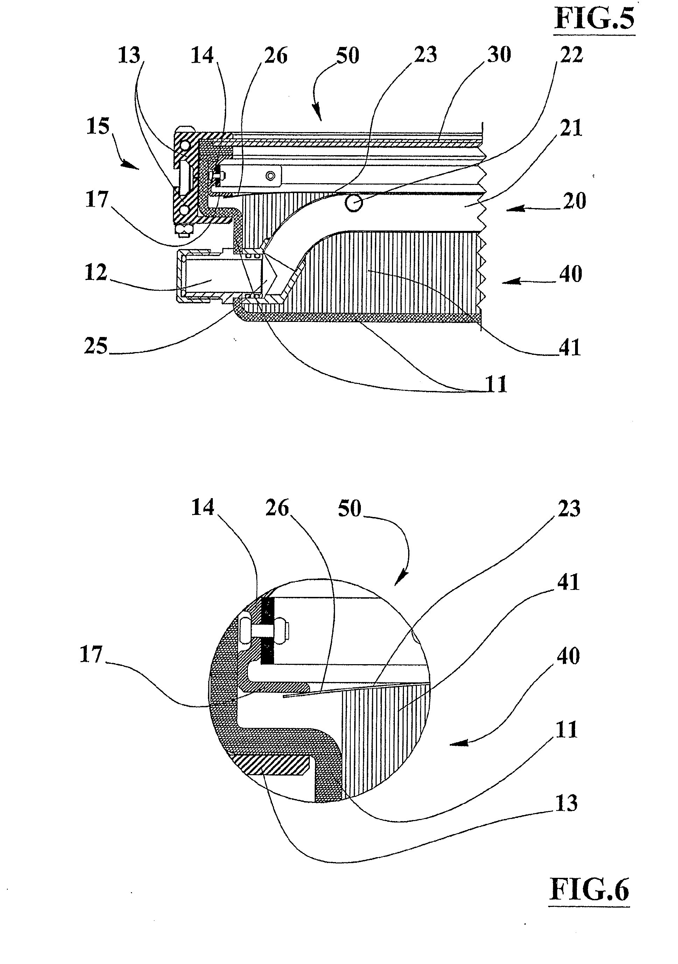

- figure 5 is a partial plan view in larger scale of a detail of figure 3;
- figure 6 is a partial plan view in larger scale of a detail of figure 3;

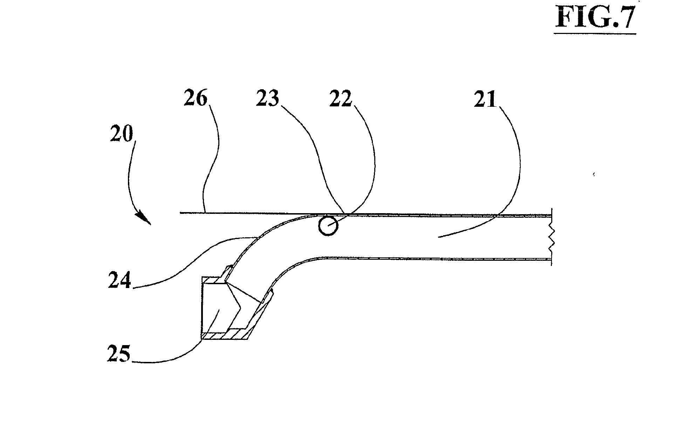

- figure 7 is a partial plan view in larger scale of a detail of figure 4.

### DETAILED DESCRIPTION

With reference to figures from 1 to 7, 10 denotes a high-efficiency solar collector device that is the object of the present invention.

The solar collector device 10 comprises a peripheral perimeter support structure 15 that connects a bottom 11 to a transparent upper slab 30, which in use is exposed to the sun, with the interposing of an absorbing means 20. The support structure 15 exhibits a plurality of external profiled members 13 preferably having an L-section, upturned and superposed such as to obtain a C-shaped profile, and held in position by common constraining means, for example screw-bolt means. The absorbing means 20 comprises a plate 23 that is practically flat and rectangular, below which a plurality of main conduits 21 and secondary conduits 22 are constrained, in which a fluid to be heated flows. The absorbing means 20 is typically made of metal and preferably copper, and the constraint between the plate 23 and the main conduits 21 and secondary conduits 22 is obtained by welding.

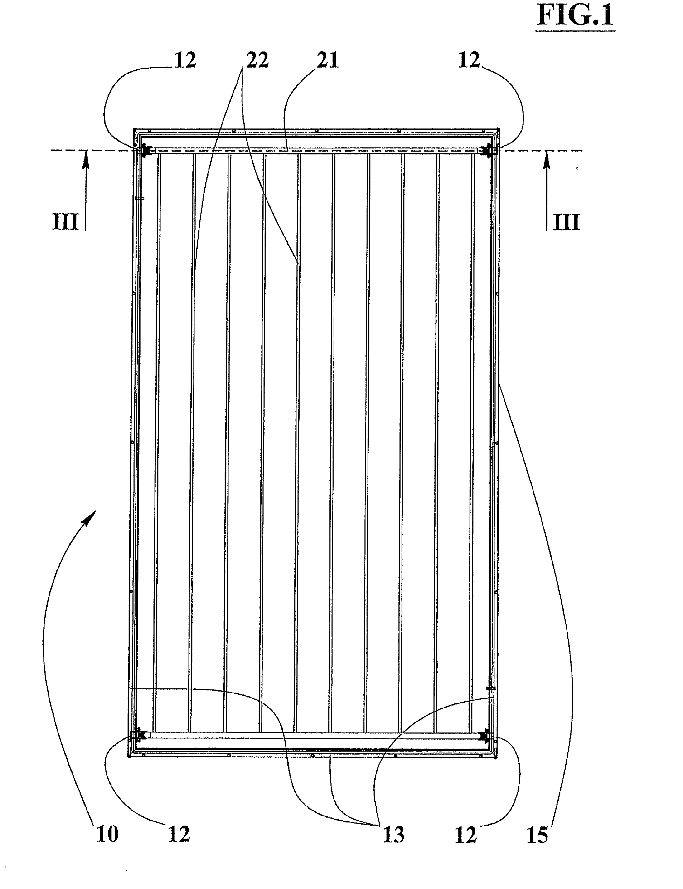

In the preferred embodiment of the device 10, the main conduits 21 are two in number, parallel at the short sides of the plate 23 and located in proximity thereto, and a plurality (10 in number in figure 1) of secondary conduits 22 which are perpendicular to the main conduits 21.

The second conduits 22 are parallel to one another, connect the two main conduits 21 and have a smaller diameter with respect thereto.

Flow connecting means are present, in proximity of the corners of the plate 23, for inlet and outlet of the fluid to be heated, connected to the ends of the main conduits 21.

In proximity of the ends thereof, the conduits 21 exhibit a partly curved tract 24 which terminates in an angled hydraulic connection 25 which corrects the dealignment present between the conduits 21 and the connecting means 12.

The plate 23 has plan dimensions that are greater than the length of the main conduits 21 and the secondary conduits 22 and in this way exhibits a projecting edge 26 along the whole perimeter thereof.

The device 10 comprises internal profiled members 14 having a projection 17 which partially superposes the projecting edge 26 and which during the assembly step deforms it elastically (upwards or downwards - the latter in the illustrated case).

The combination of the superposing and deformation enables a blocking to be obtained of the plate 23 transversally (and mainly perpendicular) thereof with respect to the internal profiled members 14 and contemporaneously enables free longitudinal dilation of the plate 23 during exposure of the device 10 to the sun.

The combination of the projection 17 and the plate 23 forms a sort of metal seal which divides the device 10 into an upper zone 50 for solar exposure and a lower zone 40 that is thermally insulated.

In detail, the upper zone 50 for sun exposure is comprised between the transparent upper slab 30 and the seal, while the thermally-insulated lower zone 40 is comprised between the bottom 11 and the seal.

In order to reduce the heat dispersion, the lower zone 40 not occupied by the plate 23 and by the conduits 21, 22 is filled with heat-insulation material 41, for example stone wool, which additionally provides greater rigidity and resistance to the device 10.

The presence of the dividing surface and the metal seal between the lower zone and the upper zone prevents the dust and other impurities from accumulating on the plate 23 of the absorbing means 20, guaranteeing a high degree of efficiency of the device 10 during use thereof.

The transparent slab 30 exposed to the sun is realised in low-emission glass or another material having similar characteristics of transparency to solar radiation such as not to limit the quantity of solar energy which strikes the absorbing means 20 while at the same time protecting it from atmospheric agents. The bottom 11 of the device is made of plastic material and is preferably conformed in a tray shape, having a lower surface and a plurality of lateral surfaces which delimit the borders thereof.

In proximity of the upper part of the lateral edges, a variation in the profile of the edges is present, which couples with the profile of the external profiled members 13, guaranteeing mutual constraint.

In the functioning of the collector device 10, the fluid to be heated enters through at least one of the connecting means 12 internally of the first main conduit 21 and then flows internally of the secondary conduits 22 where it heats up, removing heat from the absorbing means 20. Then the fluid passes from the secondary conduits 22 to the second main conduit 21 and from there is conveyed through the connecting means 12 to the users connected to the device 10.

An advantage of the present invention is to provide a high-efficiency solar collecting device which is economical, easy to realise and to maintain.

A further advantage is that it provides a device that is virtually free of deformations and stresses due to dilation and therefore is well insulated in all conditions, and which is sturdy and long-lasting.

A further advantage is to provide a device which prevents dust and other impurities from depositing on the absorbing means and consequently a device which does not exhibit degradation of its efficiency during the course of its use.

## Claims

1. A high-efficiency solar collecting device, comprising:
a peripheral support structure (15);
at least a bottom (11) supported by the peripheral support structure (15);
at least a transparent upper slab (30) for exposing to the sun, supported by the peripheral support structure (15);
an absorbing means (20) superposed by the transparent upper slab (30), the absorbing means (20) comprising:
main conduits (21) and secondary conduits (22) for a fluid to be heated; and
connecting means (12) for inlet and outlet of the fluid, ends of the main conduits (21) being in flow communication with connecting means (12) for inlet and outlet of the fluid, the device (10) being **characterised in that** it comprises:
a plate (23) to which the main and/or secondary conduits (21, 22) are fixed, the plate (23) exhibiting at least a projecting edge (26) which projectingly emerges from a predetermined number of the main and/or secondary conduits (21, 22);
an abutting body (14) at least partially internal of the support structure (15) and interposed between the slab (30) and the absorbing means (20) such as to interfere with the projecting edge (26) of the plate (23).

2. The device of claim 1, **characterised in that** the abutting body (14) exhibits a projection (17) partly superposed, inferiorly or superiorly, on the projecting edge (26) of the plate (23) such as to determine a prevalently elastic deformation of the projecting edge (26) of the plate (23) and/or of the projection (17), in particular determining a generating of coupling forces between the plate (23) and the abutting body (14) such as to enable mainly perpendicular blocking to a prevalent development plane of the plate (23) and contemporaneously a free longitudinal and/or transversal dilation of the plate (23).

3. The device of claim 2, **characterised in that** a pressure contact is developed between the projection (17) and the plate (23), which contact is configured such as to realise a substantially sealed dividing surface of the device (10) between an upper zone (50) of solar exposure and a lower zone (40) that is thermally insulated.

4. The device of claim 3, **characterised in that** the plate (23) and the projection (17) are coupled to one another along at least a whole side of the support structure (15) having a rectangular conformation, and in particular along at least also the opposite side, the plate (23) and the projection (17) defining, when coupled to one another, a mechanical static sealing device, the upper zone (50) being comprised between the transparent upper slab (30) and the mechanical static sealing device, while the lower zone (40) is comprised between the mechanical static sealing device and the bottom (11).

5. The device of any one of the preceding claims, comprising four abutting bodies (14), in a single body or coupled to one another such as to define a rectangular frame configured such as to insert internally of the bottom (11), the frame being at least partly complementarily shaped to an internal wall of the bottom (11) such as to determine an insertion direction and a preferential coupling configuration, at least one, in particular two opposite and preferentially all four of the abutting bodies (14) exhibiting a respective projection (17) emerging transversally of the internal wall of the bottom (11) in assembly conditions of the device and interfering with the projecting edge (26) of the plate (23), the device optionally comprising four corner elements configured such as to couple two consecutive abutting bodies (14) of the frame perpendicularly to one another, the abutting bodies (14) being preferably profiled members, in particular having identical sections.

6. The device of claim 5, **characterised in that** the lower zone (40) is substantially filled with heat-insulating material (41) and **in that** it contains the main and/or secondary conduits (21, 22).

7. The device of any one of the preceding claims, **characterised in that** the absorbing means (20) has a plan dimension that is substantially rectangular and **in that** the connecting means (12) are positioned in proximity of the corners of the absorbing means (20) at the ends of the main conduits (21).

8. The device of any one of the preceding claims, wherein the main conduits (21) in proximity of the respective ends exhibit a tract (24) that is partly downwardly-curved and which in particular terminates with an angled hydraulic connection (25), the projecting edge (26) projectingly emerging at the partly curved tracts.

9. The device of any one of the preceding claims, **characterised in that** the plate (23) is a substantially flat metal sheet, in particular being slim such as to be elastically deformable during an assembly step of the device to the abutting body; the absorbing means (20) optionally being made of metal and being preferably made of copper.

10. The device of any one of the preceding claims, **characterised in that** the transparent slab (30) is made of a low-emission glass or of another material having similar characteristics of transparency to solar radiation.

11. The device of any one of the preceding claims, wherein the peripheral support structure (15) includes a plurality of profiled members (13) that are removably constrained to one another and preferably have an L-shaped section.

12. The device of any one of the preceding claims, wherein the bottom (11) is made of a plastic material and is preferably conformed as a tray constrained to the peripheral support structure (15), for example to the profiled members (13) of the perimeter support structure (15).

13. The device of any one of the preceding claims, wherein the internal abutting body (14) exhibits a support surface for the transparent slab (30) and is configured such as to mutually distance the plate (23) from the transparent slab (30).

14. The device of any one of the preceding claims, wherein the absorbing means (20) comprises a predetermined number of main conduits (21) and a plurality of secondary conduits (22), each in fluid communication with at least two respective main conduits (21), the secondary conduits (22) optionally having a fluid passage section having a smaller area than that of the main conduits (21) and being coupled to the main conduits (21) such as to exhibit respective surfaces contained in a same plane that also contains the upper surfaces of the main conduits (21) and the plate (23), the secondary conduits (22) emerging transversally from the main conduits (21), the plate (23) being superposed on the main conduits (21) and the secondary conduits (22) and being constrained to one or more of the main conduits (21) and the secondary conduits (22), the plate (23) exhibiting for example a shape in plan view which is substantially rectangular and which is distanced from the transparent slab (30) by means of a space full of gas such as air.

15. An assembly process of a high-efficiency solar collector device of a type comprising:
a peripheral support structure (15);
at least a bottom (11) supported by the peripheral support device (15);
at least a transparent upper slab (30) for exposure to the sun, supported by the peripheral support structure (15);
an absorbing means (20) superposed by the transparent upper slab (30), the absorbing means (20) comprising: main conduits (21) and secondary conduits (22) for a fluid to be heated; and
connecting means (12) for the inlet and outlet of the fluid, the ends of the main conduits (21) being in flow communication with connecting means (12) for the inlet and outlet of the fluid, the device (10) being **characterised in that** it comprises:
a plate (23) to which the main and/or secondary conduits (21, 22) are inferiorly fixed, the plate (23) exhibiting at least a projecting edge (26) which emerges projectingly from a predetermined number tha main and/or secondary conduits (21, 22);
an abutting body (14), at least partially internal of the support structure (15) and interposed between the slab (30) and the absorbing means (20) such as to interfere with the projecting edge (26) of the plate (23), the process comprising following steps:
predisposing the bottom (11); inserting the absorbing means (20) in the bottom (11); inserting the abutting body (14) in the bottom (11) such as to interfere with the projecting edge (26) of the plate (23) and to deform it, in particular elastically;
positioning the transparent slab (30) superiorly of the plate (23) and in particular closing the bottom (11);
coupling the support structure (15) in order to constrain the transparent slab (30) and the bottom (11) solidly.
